Europäisches Patentamt

European Patent Office

Office européen des brevets

(19)

(11) Publication number: **0 513 453 A1**

## (12) EUROPEAN PATENT APPLICATION

(21) Application number: **91306345.9**

(22) Date of filing: **12.07.91**

(51) Int. Cl.5: **B23K 37/04**, B62D 65/00, B23Q 1/02, B23Q 3/06

Amended claims in accordance with Rule 86 (2) EPC.

(30) Priority: **01.05.91 GB 9109332**

(43) Date of publication of application:
**19.11.92 Bulletin 92/47**

(84) Designated Contracting States:
**DE ES FR GB IT SE**

(71) Applicant: **Pigott, Norman Brian**
**Twyford Orchard, Pig Lane**

Bishops Stortford, Hertfordshire, CM22 7PA(GB)

(72) Inventor: **Pigott, Norman Brian**
**Twyford Orchard, Pig Lane**
**Bishops Stortford, Hertfordshire, CM22 7PA(GB)**

(74) Representative: **Nash, Keith Wilfrid et al**
**KEITH W. NASH & Co. Pearl Assurance House 90-92 Regent Street**
**Cambridge CB2 1DP(GB)**

(54) **Workstation.**

(57) A workstation for assembling structures, in particular vehicle bodies and parts, has two or more alternative first engaging means for supporting one end of a structure under assembly, and two or more alternative second engaging means for supporting the other end. The first engaging means are mounted about a first axis for rotation in a substantially vertical plane, and the second engaging means analogously mounted about a second, preferably independently rotatable, axis. This allows one of the first and one of the second engaging means to be selected to engage and support a particular structure to be assembled. The workstation is adaptable to allow the assembly of different shapes of structure, and rotation of the engaging means in a vertical plane allows for improved access to a structure under assembly and reduces the space occupied by the engaging means.

Fig. 2

## Field of the invention

This invention provides a workstation at which structures can be assembled and a production line, for the assembly of structures, comprising such a workstation.

## Background to the invention

Structures which need to be assembled, for example by welding, generally need to be supported, rigidly and in an accurately defined fixed position, during the assembly process. This is particularly the case for the assembly of vehicle body parts.

During their assembly on the production line, vehicle bodies are conventionally held in place at a workstation (often known as a "framing buck") at which the assembly takes place. The vehicle body is generally held in place by a number of engaging means, such as engaging arms, which grip the body at appropriate points. Typically, a workstation comprises two such arms, which may either grip the vehicle body at the front and the rear or laterally, one from either side.

The shape of these engaging arms needs to be specially adapted to fit the shape of the particular vehicle body to be assembled. This will generally differ from one model of vehicle to another. Moreover, for any particular model, different variants (for instance, saloon, hatchback, etc) will differ in at least the shape of the rear of the vehicle body, which will again require corresponding changes in the engaging means used to support the body, or at least that used to support the rear end of the body.

In order to adapt workstations for use with different vehicle models, it is known to have a number of different engaging arms mounted in the workstation in such a manner as allows one particular desired arm to be selected for use at any one time.

For instance, it is known for the workstation to comprise three or four different engaging arms for engaging the front end of the vehicle body, the arms being rotatably mounted about an axis such that rotation of the four arms in the horizontal plane above the vehicle body allows the selection of a desired arm. A corresponding set of three or four arms for engaging the rear of the vehicle body is mounted, also for rotation in the horizontal plane, above the rear end of the vehicle body. This allows the selection of a particular pair of engaging arms to match the front and rear of the vehicle body being assembled.

Although this known system allows for a certain degree of adaptability in the workstation, the arrangement of several different engaging arms above the vehicle body being assembled is cumbersome. It would therefore be desirable to provide an improved workstation which combined such an adaptability with a reduction in the space taken up by the engaging means.

## Statement of the invention

According to the present invention there is provided a workstation at which any one of a number of structures can be assembled, as by welding, comprising two or more alternative first engaging means, each adapted to engage and support one end of a structure to be assembled, the first engaging means being rotatably mounted about a first axis; two or more alternative second engaging means, each adapted to engage and support the other end of the structure to be assembled, the second engaging means being rotatably mounted about a second axis; the first and second engaging means being rotatable in a substantially vertical plane so as to allow one of the first engaging means and one of the second engaging means to be selected to engage and support a particular structure to be assembled.

The workstation provided by the present invention, whilst being generally useful for the assembly of any structure, is of particular use in the assembly of vehicle body parts. Thus, whilst the workstation of the present invention may be used to assemble any structure, the structure to be assembled will conveniently be the whole or part of a vehicle body.

The mounting of the engaging means, and their rotation in order to select a particular desired engaging means, in the vertical plane ensures that the engaging means takes up less space than in conventional workstations. This also improves access, to the structure under assembly, for the apparatus needed for the assembly process. Additionally, because the first and second engaging means can be selected from two or more alternatives, the workstation is sufficently adaptable to allow several different models of vehicle to be assembled at the same workstation.

By "substantially vertical plane" is preferably meant any plane substantially perpendicular to the direction of passage of the structure into or out of the workstation, which structure will generally be mounted in the workstation in a horizontal plane.

The first and second engaging means are preferably independently rotatable about the first and second axes respectively. This allows for even greater adaptability. Not only can two or more different "pairs" of first and second engaging means be selected to engage and support a number of different structures, but also one particular first engaging means can be combined with any one of the second engaging means and vice versa. In the case where the structure to be assembled is a vehicle body, this allows for different variants of the same vehicle model to be assembled at the same workstation - typically, the first engaging means would be selected to support the front end of the vehicle body, and the choice of the second engaging means to support the rear end of the body would depend on the particular variant of that vehicle model under assembly.

The workstation may comprise any sensible number of first and second engaging means, depending on such constraints as available space and required access to the structure to be assembled. Preferably, the workstation comprises either three or four alternative first engaging means, and either three or four alternative second engaging means. The provision of three alternative engaging means rotatably mounted about an axis allows for the selection of any one of the three alternatives without the need for a complete 360° rotation of the axis.

Each of the first and second engaging means preferably comprises an engaging arm adapted to grip the structure to be assembled at certain predetermined points. Preferably, these arms are so arranged as to grip the structure from inside the structure, since this arrangement allows for improved access to the structure for the apparatus required in the assembly process (for instance robot welding apparatus). However, the arms may alternatively grip the structure from the outside.

Preferably, each of the first engaging means and each of the second engaging means is moveable, independently of its rotation about its respective mounting axis, between an engaging position in which it can support and engage an end of the structure to be assembled and a rest position in which it is substantially clear of the structure to be assembled. Such movement may be achieved, for instance, by pivoting the engaging means about a point located on a mounting means by which the engaging means is mounted about its respective axis.

The engaging means may be driven between the engaging and rest positions, for instance by means of a conventional electric motor or hydraulic drive.

Conveniently, the base of the structure to be assembled is supported from below, during assembly, by one of a number of interchangeable lower support means. The form of the support means will be conventional but is likely to vary depending on the particular structure to be assembled, thus, the use of a number of interchangeable lower support means allows for greater adaptability in the workstation as a whole. The lower support means are preferably interchangeable by means of the movement of a row of such support means transversely to the direction of passage of the structure into or out of the workstation. If, however, there are only two such alternative support means, movement of the two in order to select the desired support means in any particular case could also be in a direction parallel to the direction of passage of the structure.

Each of the lower support means is preferably moveable between a raised position, in which it can support the base of the structure to be assembled, and a lowered position.

During assembly of the structure, the first and/or the second engaging means is preferably secured in a fixed position relative to the workstation at at least two different points. This allows the structure to be held rigidly in position and hence allows for greater accuracy in the assembly process. For instance, in the case of an engaging arm, the end of the arm remote from its mounting axis might be secured, by conventional means, to an appropriately positioned pillar in the workstation.

The invention also provides a production line for the production of articles, having at some point along its length a workstation, as described above as being in accordance with the invention, for the assembly of the articles or of any parts thereof.

There is also provided by the invention a workstation, as described above as being in accordance with the invention and additionally comprising apparatus for the assembly of the structure when the structure is supported in the workstation by the first and second engaging means.

It is to be understood that, although the workstation of the present invention is especially useful in supporting a structure during its assembly, the workstation would also be of use in supporting a structure, for instance a vehicle body, whilst other work were to be carried out on that structure, for instance, servicing and general repairs.

The present invention will now be described in greater detail by means of the following example and with reference to the accompanying drawings, of which:-

Figure 1 is a schematic plan view of a conventional workstation for the assembly of vehicle bodies;

Figure 2 is a side view of a workstation in accordance with the present invention;

Figure 3 is an end elevation of the workstation shown in Figure 2;

Figure 4 is a section taken along the line II-II in Figure 2;

Figure 5 illustrates schematically an alternative embodiment of the workstation of Figures 2-4; and

Figure 6 shows in more detail the lower support means used in the workstation of Figures 2-4.

## Detailed description of the drawings

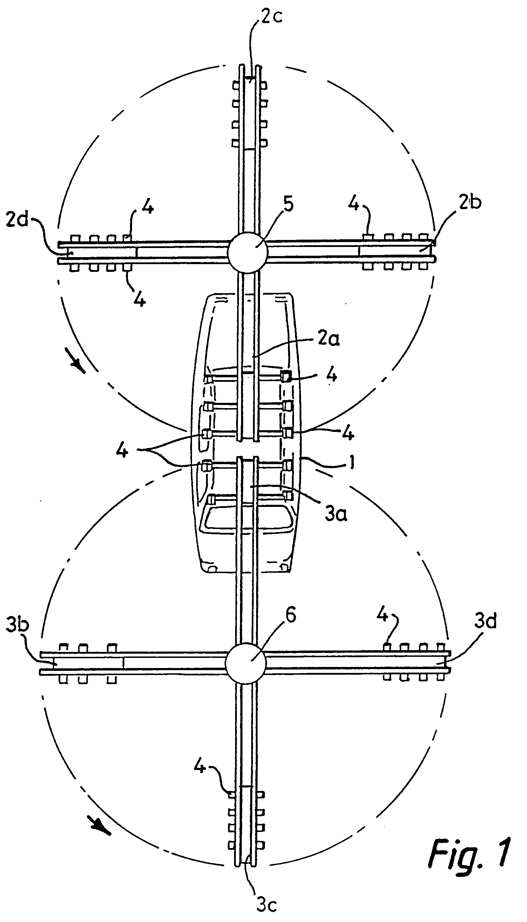

In the conventional workstation shown in plan view in Figure 1, a vehicle body 1 to be assembled is supported in position by the front (2a) and rear (3a) engaging arms. Each of these arms is of conventional structure, having a number of claws 4 (not all of which, for convenience, are labelled in Figure 1), which grip the vehicle body at convenient points from above.

The front and rear engaging arms, 2a and 3a, are rotatably mounted, to allow their rotation in the horizontal plane above the vehicle body, about axes 5 and 6 respectively. Three alternative front engaging arms, 2b, 2c and 2d, and three alternative rear engaging arms, 3b, 3c, and 3d are also provided on axes 5 and 6. The appropriate front and rear arm for the particular shape of vehicle body under assembly is selected by rotation about the axes 5 and 6 in the directions shown by the arrows.

Whilst this workstation is adaptable so as to accommodate a number of different vehicle models, the arrangement of the engaging arms in the horizontal plane above the vehicle body is cumbersome and space-consuming.

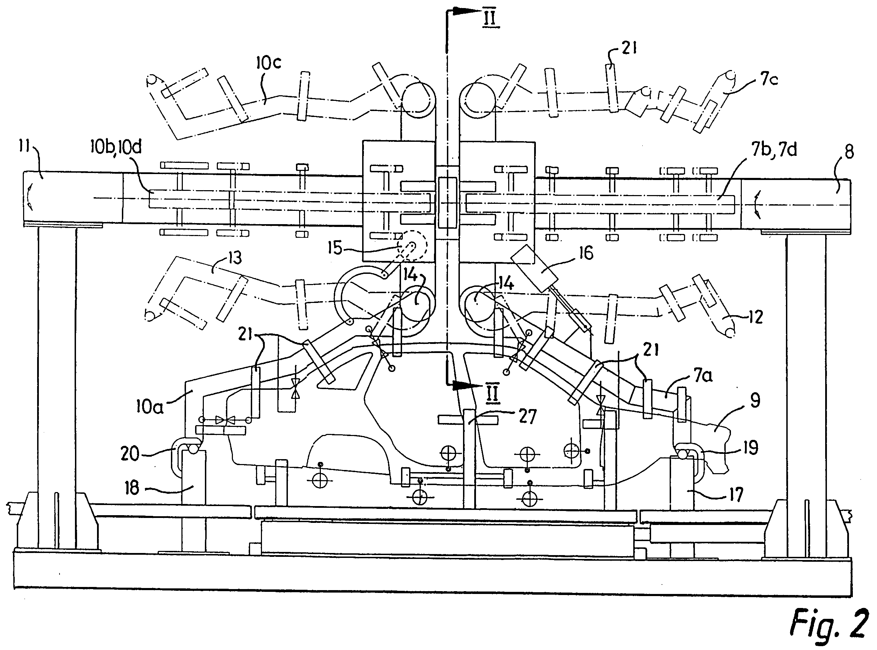

In contrast, the workstation shown in Figure 2 has been constructed in accordance with the present invention.

Here, the four alternative front engaging arms, 7a-7d, are rotatably mounted about the axis 8 which allows their rotation in a vertical plane. Again, by rotation about the axis 8, any one of the alternative front engaging arms can be selected, according to the shape of the vehicle body 9 under assembly. Because the arms are mounted for rotation in a vertical plane, the arrangement as a whole takes up less space than the workstation shown in Figure 1.

Four alternative rear engaging arms, 10a-10d, are rotatably mounted about the axis 11, also for rotation in a vertical plane. Again, an appropriate rear engaging arm is selected to engage and support the rear of the particular vehicle body under assembly.

Axes 8 and 11 are rotatable independently, which allows the selection of a desired front engaging arm independently of the selection of a corresponding rear engaging arm. This is particularly useful when different variants of the same vehicle model are to be assembled. Using a single front engaging arm, a rear engaging arm can be selected according to whether the variant to be assembled is, for instance, a saloon, a hatchback, etc.

Each of the engaging arms is pivotable between a vehicle engaging position and a rest position in which it is substantially clear of the vehicle body being assembled. Arms 7a and 10a are shown in Figure 2 in the engaging position, with their alternative rest positions indicated at 12 and 13. The arms pivot between these two alternative positions about points 14 and may be driven between the two positions by means, for instance, of an electric motor drive 15 or a hydraulic drive 16, shown in Figure 2 as alternatives.

In order to secure the vehicle body 9 rigidly in a fixed position to allow for its accurate assembly, the engaging arms 7a and 10a are secured to pillars 17 and 18 by means of any conventional and suitable securing devices, shown schematically in Figure 2 as 19 and 20 respectively.

Each of the arms, 7a-7d and 10a-10d, comprises a number of "claws", labelled 21 in Figure 2, which grip appropriate points on the vehicle body. For instance, the front engaging arm 7a would typically grip the front of the roof rail, the front pillar, the engine compartment and the cowl of the front part of the vehicle body, whilst the rear engaging arm 10a would locate the rear of the rail roof side, the rear pillar and the load space opening.

Typical points at which welding might be carried out on the vehicle body 9 during the assembly process are indicated by double arrows in Figure 2.

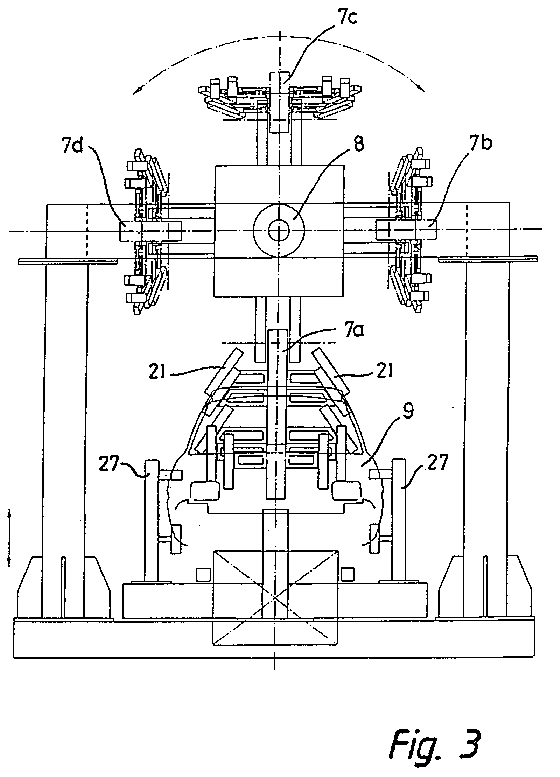

An end elevation of the workstation is shown schematically in Figure 3, in which only the front four engaging arms, 7a-7d, are illustrated.

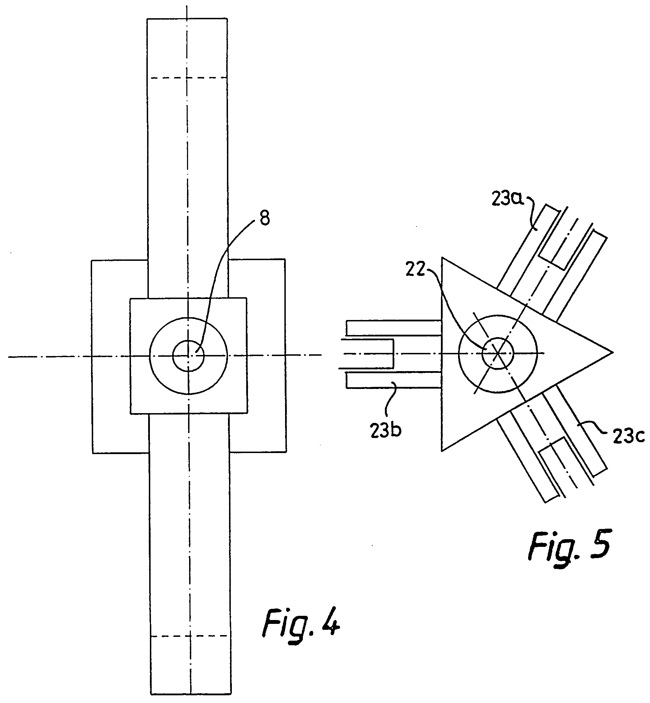

Figure 4 shows a diagrammatic cross section of part of the workstation of Figure 2, taken along the line II-II.

Figure 5 illustrates how an alternative version of the workstation of Figures 2-4 might provide only three alternative front engaging arms and three alternative rear engaging arms. The axis 22 corresponds to the axis 8 or 11 in Figure 2, about which three alternative engaging arms, 23a, 23b and 23c, are rotatably mounted. Whilst this arrangement allows for fewer vehicle models or variants to be accommodated in the same workstation, it does have the advantage that any one of the three engaging arms can be selected by rotating about axis 22 by only 120°, a complete rotation about axis 22 not being necessary.

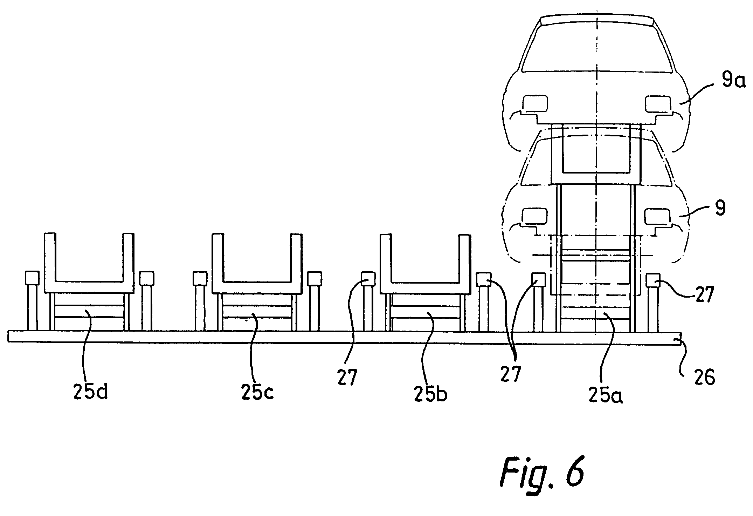

In the workstation shown in Figures 2-4, the vehicle body 9 is supported from below by an appropriately shaped lift table. This engages and supports the vehicle body and allow it to be raised or lowered as shown in Figure 6. Here, the vehicle body 9 to be assembled can be raised by means of the (conventionally designed) lift table 25a to its raised position 9a, in which work can be carried out on the body.

Three alternative lift tables, 25b-25d, are provided in the workstation of Figure 2 to allow for four different vehicle bodies to be supported. The four alternative lift tables are arranged in a row on the main base 26, which in the workstation of Figure 2 is moveable in a direction lateral to the direction in which the vehicle body 9 faces, such movement allowing the selection of an appropriate lift table 25a-25d.

The lift tables are of generally conventional design. To either side of each table, lateral supports 27 (also shown in Figures 2 and 3) are provided to assist in the accurate location and securing of the vehicle body during assembly.

The workstation shown in Figures 2-4 could be used to support a vehicle body whilst any manner of work were to be carried out on the body, for instance, painting or general repairs. However, typically the workstation would form part of a production line for the manufacture of vehicles of a particular model (including different variants of that model), at which workstation the vehicle bodies would be supported to allow welding of the bodies to take place.

## Claims

1. A workstation at which any one of a number of differing vehicle bodies can be assembled, as by welding, comprising two or more alternative first engaging means, each adapted to engage and support the front end of a vehicle body to be assembled, the first engaging means being rotatably mounted about a first axis; and two or more alternative second engaging means, each adapted to engage and support the rear end of the vehicle body to be assembled, the second engaging means being rotatably mounted about a second axis; the workstation being characterised in that the first and second engaging means are rotatable in a substantially vertical plane about respective horizontal axes disposed above the vehicle body to be assembled in the plane of the longitudinal centre line of the vehicle body, and in that the first and second engaging means are independently rotatable so as to allow any one of the first engaging means to be selected in combination with any one of the second engaging means to engage and support a particular vehicle body to be assembled.

2. A workstation according to claim 1, wherein the first and second engaging means are independently rotatable about collinear first and second axes respectively.

3. A workstation according to claim 1 or claim 2, wherein each of the first and second engaging means comprises an engaging arm adapted to grip a vehicle body to be assembled at certain predetermined points.

4. A workstation according to any one of the preceding claims, wherein the first and second engaging means are so arranged as to grip a vehicle body to be assembled from inside the structure.

5. A workstation according to any one of the preceding claims, wherein each of the first engaging means and each of the second engaging means is movable, independently of its rotation about its respective mounting axis, between an engaging position in which it can support and engage an end of a vehicle body to be assembled and a rest position in which it is substantially clear of the vehicle body.

6. A workstation according to any one of the preceding claims, wherein the base of a vehicle body to be assembled is supported from below, during assembly, by one of a number of interchangeable lower support means.

7. A workstation according to claim 6, wherein the lower support means are interchangeable by means of the movement of a row of such support means transversely to the longitudinal axis of the vehicle body.

8. A workstation according to claim 6 or claim 7, wherein each of the lower support means is movable between a raised position, in which it can support the base of a vehicle body to be assembled, and a lowered position.

9. A workstation according to any one of the preceding claims, additionally comprising apparatus for the assembly of a vehicle body when the vehicle body is supported in the workstation by the first and second engaging means.

10. A production line for the production of articles, having at some point along its length a workstation according to any one of the preceding claims, for the assembly of the vehicle bodies.

*Fig. 1*

Fig. 2

Fig. 3

Fig. 4

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 350 097 (FATA AUTOMATION) * Column 3, lines 23-44; column 4, lines 9-14; claim 1; figures 1-4 * --- | 1-5,10 | B 23 K 37/04 B 62 D 65/00 B 23 Q 1/02 B 23 Q 3/06 |
| X | DE-A-3 914 970 (FATA AUTOMATION) * Column 2, lines 9-47; claims 1-3; figures 1-5 * | 1,3-5, 10 | |
| A | --- | 2 | |
| X | GB-A-3 159 469 (SCIAKY) * Page 1, lines 34-69; claim 1; figures 1,3,4 * --- | 1,3-5, 10 | |
| A | US-A-4 593 850 (ARIGA) * Column 6, line 45 - column 7, line 3; claim 5; figures 1,2 * ----- | 1,3,4, 10 | |

TECHNICAL FIELDS
SEARCHED (Int. Cl.5)

B 23 Q
B 23 K
B 62 D
B 23 P

~~The present search report has been drawn up for all claims~~

| Place of search | Date of completion of the search | Examiner |
|---|---|---|
| THE HAGUE | 04-02-1992 | LJUNGBERG R.N. |

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

## LACK OF UNITY OF INVENTION

The Search Division considers that the present European patent application does not comply with the requirement of unity of invention and relates to several inventions or groups of inventions,
namely:

see sheet -B-

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

1-5,10

namely claims:

European Patent
Office

EP 91 30 6345 -B-

## LACK OF UNITY OF INVENTION

The Search Division considers that the present European patent application does not comply with the requirement of unity of invention and relates to several inventions or groups of inventions, namely:

1. Claims 1-5,10: Workstation with vertical rotatable engaging means.
   Problem: To improve the adaptability of a workstation
   Solution: by rotating the engaging means vertically.

2. Claims 6-9: Support means for a structure in a workstation.
   Problem: To support the structure to be assembled
   Solution: by interchangeable lower support means.